# EUROPÄISCHE PATENTSCHRIFT

(11) **EP 0 887 235 B1**
(45) Veröffentlichungstag und Bekanntmachung des Hinweises auf die Patenterteilung: **30.07.2003**
(21) Anmeldenummer: 98110543.0
(22) Anmeldetag: 09.06.1998
(51) Int. Cl.: B60R 19/18

(54) **Strukturbauteil für Fahrzeuge**
Structural element for vehicles
Elément de structure pour véhicules

(30) Priorität: 24.06.1997 DE 19726720
(43) Veröffentlichungstag der Anmeldung: 30.12.1998
(73) Patentinhaber: DaimlerChrysler AG, 70567 Stuttgart (DE)
(72) Erfinder: Artner, Bernd, 71272 Renningen (DE); Krüger-Eppstein, Albrecht, 70178 Stuttgart (DE)

(56) Entgegenhaltungen:
- DE-A- 19 545 069
- DE-C- 4 413 641
- DE-C- 19 525 347
- US-A- 5 395 036

## Beschreibung

Die Erfindung betrifft ein Strukturbauteil gemäß dem Oberbegriff des Hauptanspruches.

Leistenförmige Strukturbauteile wie sie in Kraftfahrzeugtüren als Stoßauffangvorrichtung, als Stoßstangenverstärkung oder als Karosserieträger verwendet werden, sind aus der DE 195 25 347 C1 bekannt. Diese Patentschrift beschreibt ein leistenförmiges Strukturbauteil mit einem Profilteil, welches in seiner Querschnittsebene mindestens zwei durch Blechumformung hergestellte geschlossene Kammern aufweist. Zwischen diesen beiden geschlossenen Kammern befindet sich ein offener Bereich, der durch Versteifungsteile verschließbar ist. Diese Erfindung beruht dabei darauf, daß das Profilteil aus einem einzigen Blechstreifen hergestellt wird. Eine absolute einteilige Herstellung des leistenförmigen Strukturbauteiles läßt sich jedoch nicht erreichen, da in dieser Patentschrift von weiteren Versteifungsteilen ausgegangen wird, die benötigt werden, damit der offene Bereich zwischen den beiden Hohlkammern wenigstens in Teilstücken geschlossen wersen separat angebracht werden. Somit wird keine Einteiligkeit des herzustellenden Teiles erreicht. Das Anbringen separater Versteifungsteile ist außerdem relativ aufwendig und kostenintensiv. Um eine zufriedenstellende Stabilität des Strukturbauteiles erreichen zu können, ist es bei der genannten Patentschrift außerdem notwendig, daß in dem offenen Bereich zwischen den Hohlkammern des Profilteiles zwischenwandige Abstandsteile angeordnet sind. Durch diese Abstandsteile werden weitere Kosten und ein weiterer Herstellungsaufwand verursacht.

Ein weiteres Verfahren zur Herstellung einer Kraftfahrzeugstoßstange ist in der US-PS 5,395,036 beschrieben. Diese Patentschrift beschreibt ein Verfahren zur einteiligen Herstellung einer Kraftfahrzeugstoßstange. Diese Konstruktion ist jedoch wenig biegefest. Die genannte Konstruktion weist weder Abstandsteile noch Versteifungsteile, wie sie beispielsweise in der DE 195 25 347 C1 vorgesehen sind, auf. Bei dem in der US-Schrift erwähnten Verfahren wurde in keinstem Maße Wert auf Stabilität bzw. auf eine hohe Biegefestigkeit der Konstruktion gelegt.

Ein Stoßfänger für Kraftfahrzeuge, der aus einem einstückigen Profilträger besteht, ist außerdem in der DE 31 44 844 beschrieben. Bei dieser Patentschrift wird im Vergleich zur US-Schrift eine höhere Stabilität der Stoßstange dadurch erreicht, daß in der Konstruktion innere Stege vorgesehen sind. Diese inneren Stege bewirken eine entsprechende Stabilität. Der Profilträger wird jedoch nicht wie bei den anderen beiden Patentschriften geschweißt, sondern stranggepreßt oder gezogen. Hierbei handelt es sich also um ein vollkommen anderes Herstellverfahren.

Prinzipiell ähnlich zu der DE 31 44 844 C2 ist die US-PS 5,340,178. Die US-Patentschrift weist ebenfalls innere Stege auf, die zur Verstärkung der Konstruktion dienen. Der Profilträger wird jedoch ebenfalls nicht geschweißt sondern stranggepresst oder gezogen.

Der Erfindung liegt die Aufgabe zugrunde, ein Strukturbauteil aus einem preisgünstigen Vormaterial zu schaffen, das ein hohes Widerstandsmoment gegen Biegen aufweist und das mittels des kostengünstigen und prozeßsicher beherrschbaren Herstellungsverfahrens durch Profilrollen produzierbar ist.

Diese Aufgabe wird erfindungsgemäß durch die Merkmale des kennzeichnenden Teiles des Hauptanspruches gelöst.

Dadurch daß zwischen den zwei Hohlprofilkammern wenigstens ein Zwischensteg verläuft, erhält das Strukturbauteil eine sehr hohe Biegefestigkeit und Stabilität. Damit können hohe Lastanforderungen erfüllt werden. Durch die einstückige Ausbildung der Hohlprofilkammern und des Zwischensteges läßt sich das Strukturbauteil besonders leicht herstellen. Es ist somit kein unnötiges Verschweißen von separaten Verstrebungen notwendig. Das Strukturbauteil erfüllt auch in besonderem Maße aerodynamische Anforderungen.

Das gesamte Strukturbauteil läßt sich zusammen mit dem Zwischensteg aus einer Coilbreite herstellen. Dadurch wird ein besonders kostengünstiges Produzieren des Strukturbauteiles möglich. Das gesamte Strukturbauteil muß lediglich an zwei Stellen mittels herkömmlicher Verfahren z.B. Schweißen verbunden werden. Dies wird in vorteilhafter Weise durch die spezielle Form des Strukturbauteiles ermöglicht.

Vorteilhafte Weiterbildungen und Ausgestaltungen der Erfindung sind in den weiteren Unteransprüchen beschrieben.

Ein Ausführungsbeispiel der Erfindung ist nachfolgend anhand der Zeichnung beschrieben.

Es zeigt:
- Fig. 1: einen Schnitt durch ein zweikammriges Hohlprofil mit einem Zwischensteg;
- Fig. 2: einen Schnitt durch ein dreikammriges Hohlprofil mit zwei Zwischenstegen, das gekrümmt verläuft, und
- Fig. 3: eine Draufsicht auf ein Strukturbauteil.

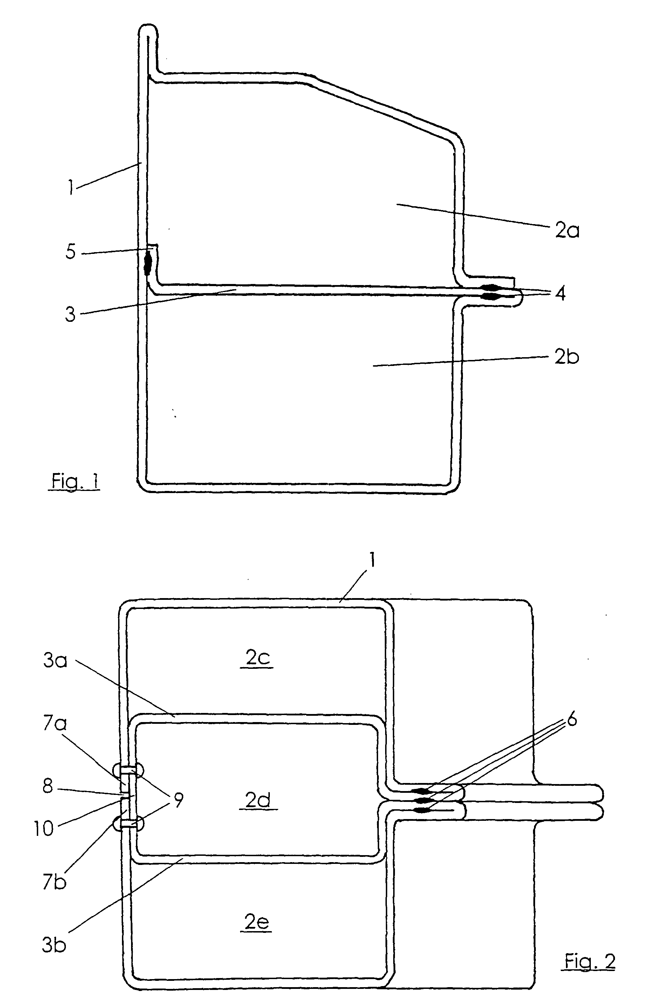

Fig. 1 zeigt ein einteiliges Strukturbauteil 1, das aus zwei Hohlprofilkammern 2a, 2b und einem Zwischensteg 3 besteht. Der Zwischensteg 3 teilt die beiden Hohlprofilkammern 2a, 2b in annähernd gleich große Kammern. Durch diese Aufteilung wird eine besonders hohe Stabilität erzeugt, da der Zwischensteg 3 eine gleichmäßige Unterstützung bietet. Der Zwischensteg 3 geht von einer Längsnaht 4 aus und wird an seinem von der Längsnaht 4 abgewandten Endteil, mit der Innenseite der Längswand der Hohlprofilkammer 2a verschweißt. Da das ganze Strukturbauteil 1 aus einem einzigen Blech besteht, stellt das Ende des Zwischensteges 3 gleichzeitig ein Ende des Bleches dar. Das andere Ende des Bleches wird am Beginn des Zwischensteges 3 auf der anderen Längsseite angeschweißt.

Die Verbindung des Endstückes des Zwischensteges 3 mit der Innenwand der Hohlprofilkammer 2a erfolgt, wie in Fig. 1 ersichtlich, durch eine Abkantung 5. Mit Hilfe dieser Abkantung 5 läßt sich eine besonders vorteilhafte Verbindung mit der Innenseite der Hohlprofilkammer 2a durch verschweißen oder vernieten erzeugen.

Wie in Fig. 2 erkennbar, besteht das Strukturbauteil 1 in dieser Ausgestaltung aus drei Hohlprofilkammern 2c, 2d, 2e, die durch zwei Zwischenstege 3a, 3b gebildet werden. Die Zwischenstege 3a, 3b sind so angeordnet , daß sich ein innenliegendes Hohlprofil 2d bildet. Das innenliegende Hohlprofil 2d besitzt nur eine einzige Längsnaht 6, die mit der ersten außenliegenden Längsnaht der außenliegenden Hohlprofilkammern 2c, 2e zusammenfällt, Durch die innenliegende Hohlprofilkammer 2d erhält das Strukturbauteil 1 eine hohe Stabilität und Biegefestigkeit, ohne daß hierfür ein weiterer Schweißvorgang notwendig ist, da die Längsnaht 6 des inneren Hohlprofiles 2d mit der ersten Längsnaht der außenliegenden Hohlprofilkammern 2c, 2e identisch ist.

Das Blech des Strukturbauteils 1 besitzt zwei Längsseiten 7a, 7b, deren Enden auf der von der ersten Längsnaht 6 abgewandten Seite durch eine zweite Längsnaht 8 verbunden sind. Die Verbindung der Längsseiten 7a, 7b kann auch dadurch erfolgen, daß diese durch Nieten 9 an der Verbindungswand 10 befestigt werden. Diese Verbindung kann selbstverständlich auch durch andere Maßnahmen erfolgen.

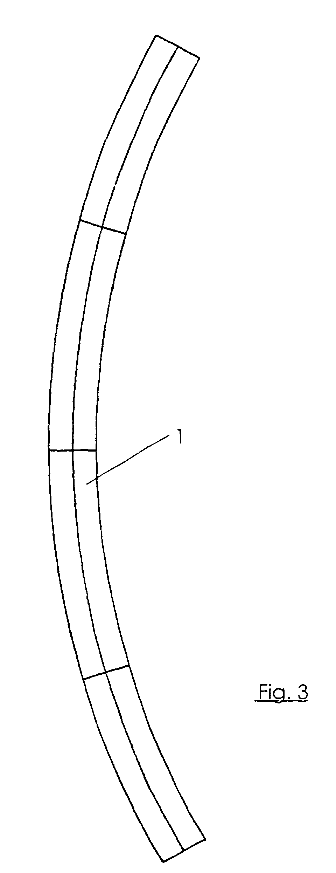

Das Strukturbauteil weist, wie in Fig. 3 erkennbar ist, eine Längskrümmung auf. Der Krümmungsradius kann hierbei beispielsweise 2,5 m betragen. Das Strukturbauteil 1 kann direkt in einer herkömmlichen Profilieranlage ohne zusätzliches Handling mit konstantem Radius gebogen werden. Das Strukturbauteil 1 kann aus Stahl oder Aluminium bestehen. Bei Verwendung von Leichtmetallblech können die Nähte als Nietreihen ausgebildet sein.

## Patentansprüche

1. Strukturbauteil, das in seiner Querschnittsebene mindestens zwei durch Roll-Umformen hergestellte geschlossene Hohlprofilkammern (2a,2b,2c,2d,2e) aufweist, die aus einem einzigen Blechteil hergestellt sind, wobei die wenigstens zwei Hohlprofilkammern mit wenigstens einer Längsnaht (4,6) versehen sind,
**dadurch gekennzeichnet, daß**
zwischen den wenigstens zwei Hohlprofilkammern (2a,2b,2c,2d,2e) wenigstens ein Zwischensteg (3,3a,3b) verläuft, der mit den Wänden der Hohlprofilkammern (2a,2b,2c,2d,2e) einstückig ist, wobei der wenigstens eine Zwischensteg (3,3a,3b) von der Längsnaht (4,6) ausgeht und auf der von der Längsnaht (4,6) abgewandten Längsseite mit einer Innenseite des Blechteiles verbunden ist.

2. Strukturbauteil nach Anspruch 1,
**dadurch gekennzeichnet, daß**
das Längsende des Zwischensteges (3,3a,3b) durch eine Abkantung (5) mit der Innenseite des Blechtei-1es verbunden ist.

3. Strukturbauteil nach Anspruch 2,
das Längsende des Zwischensteges (3,3a,3b) durch Verschweißen oder Vernieten mit der Innenseite des Blechteiles verbunden ist.

4. Strukturbauteil nach Anspruch 1,
**dadurch gekennzeichnet, daß**
zwei Zwischenstege (3a,3b) zwischen den beiden Hohlprofilkammern (2c,2e) unter Bildung eines innenliegenden Hohlprofiles (2d) auf Abstand voneinander liegen.

5. Strukturbauteil nach Anspruch 4,
**dadurch gekennzeichnet, daß**
die einzige Längsnaht der innenliegenden Hohlprofilkammer (2d) mit der ersten Längsnaht (6) der außenliegenden Holprofilkammern (2c,2e) zusammenfällt.

6. Strukturbauteil nach Anspruch 5,
**dadurch gekennzeichnet, daß**
die beiden Längsseiten (7a,7b) des Blechteiles auf der von der ersten außenliegenden Längsnaht (6) abgewandten Seite durch eine zweite außenliegende Längsnaht (8) miteinander verbunden sind.

7. Strukturbauteil nach Anspruch 6,
**dadurch gekennzeichnet, daß**
auf der von der ersten äußeren Längsnaht (6) abgewandten Seite die beiden Zwischenstege (3a,3b) durch eine Verbindungswand (10) miteinander verbunden sind, wobei die beiden Enden des Blechteiles (7a,7b) an der Verbindungswand (10) befestigt sind.

8. Strukturbauteil nach Anspruch 7,
**dadurch gekennzeichnet, daß**
die beiden Längsseiten (7a,7b) des Blechteiles durch Nieten (9) mit der Verbindungswand (10) verbunden sind.

9. Strukturbauteil nach einem der Ansprüche 1 bis 8,
**dadurch gekennzeichnet, daß**
die Hohlprofilkammern (2a,2b,2c,2d,2e) in Längsrichtung gekrümmt verlaufen.

## Claims

1. Structural component, having at least two closed hollow section compartments (2a, 2b, 2c, 2d, 2e) in its cross-sectional plane made by roll forming and made from a single piece of sheet, in which the at least two hollow section compartments are provided with at least one longitudinal seam (4, 6),
**characterised in that**
at least one intermediate web (3, 3a, 3b) extends between the at least two hollow section compartments (2a, 2b, 2c, 2d, 2e) and is integral with the walls of the hollow section compartments (2a, 2b, 2c, 2d, 2e), the at least one intermediate web (3, 3a, 3b) starting from the longitudinal steam (4, 6) and being joined to an internal face of the sheet piece on the longitudinal side remote from the longitudinal seam (4, 6).

2. Structural component as claimed in claim 1,
**characterised in that**
the longitudinal end of the intermediate web (3, 3a, 3b) is joined to the internal face of the sheet piece by a bent edge (5).

3. Structural component as claimed in claim 2,
**characterised in that**
the longitudinal end of the intermediate web (3, 3a, 3b) is joined to the internal face of the sheet piece by welding or rivetting.

4. Structural component as claimed in claim 1,
**characterised in that**
two intermediate webs (3a, 3b) between the two hollow section compartments (2c, 2e) sit at a distance apart from one another forming an internally lying hollow section (2d).

5. Structural component as claimed in claim 4,
**characterised in that**
the single longitudinal seam of the internally lying hollow section compartment (2d) coincides with the first longitudinal seam (6) of the externally lying hollow section compartments (2c, 2e).

6. Structural component as claimed in claim 5,
**characterised in that**
the two longitudinal sides (7a, 7b) of the sheet piece are joined to one another by a second externally lying longitudinal seam (8) on the side remote from the first externally lying longitudinal seam (6).

7. Structural component as claimed in claim 6,
**characterised in that**
the two intermediate webs (3a, 3b) are joined to one another by a connecting wall (10) on the side remote from the first external longitudinal seam (6), the two ends (7a, 7b) of the sheet piece being secured to the connecting wall (10).

8. Structural component as claimed in claim 7,
**characterised in that**
the two longitudinal sides (7a, 7b) of the sheet piece are joined to the connecting wall (10) by rivets (9).

9. Structural component as claimed in one of claims 1 to 8,
**characterised in that**
the hollow section compartments (2a, 2b, 2c, 2d, 2e) extend in a curve in the longitudinal direction.

## Revendications

1. Elément ou composant de structure, qui dans le plan de sa section transversale présente au moins deux compartiments de profilé creux fermés (2a, 2b, 2c, 2d, 2e) fabriqués par un procédé de formage par roulage et réalisés à partir d'une seule pièce de tôle, lesdits au moins deux compartiments de profilé creux étant pourvus d'au moins un joint longitudinal (4, 6),
**caractérisé en ce qu'**entre lesdits au moins deux compartiments de profilé creux (2a, 2b, 2c, 2d, 2e) s'étend au moins une nervure intermédiaire (3, 3a, 3b) qui est réalisée d'un seul tenant avec les parois des compartiments de profilé creux (2a, 2b, 2c, 2d, 2e), ladite au moins une nervure intermédiaire (3, 3a, 3b) étant issue du joint longitudinal (4, 6) et étant reliée ou assemblée au côté intérieur de la pièce de tôle sur le côté longitudinal opposé à celui où se trouve le joint longitudinal (4, 6).

2. Elément de structure selon la revendication 1,
**caractérisé en ce que** l'extrémité longitudinale de la nervure intermédiaire (3, 3a, 3b) est reliée, par l'intermédiaire d'un bord coudé (5), au côté intérieur de la pièce de tôle.

3. Elément de structure selon la revendication 2,
**caractérisé en ce que** l'extrémité longitudinale de la nervure intermédiaire (3, 3a, 3b) est reliée par soudage ou rivetage au côté intérieur de la pièce de tôle.

4. Élément de structure selon la revendication 1,
**caractérisé en ce que** deux nervures intermédiaires (3a, 3b) sont disposées l'une à distance de l'autre entre les deux compartiments de profilé creux (2c, 2e) moyennant formation d'un profilé creux intérieur (2d).

5. Elément de structure selon la revendication 4,
**caractérisé en ce que** le seul joint longitudinal du compartiment de profilé creux (2d) situé à l'intérieur, coïncide avec le premier joint longitudinal (6) des compartiments de profilé creux (2c, 2e) situés à l'extérieur

6. Elément de structure selon la revendication 5,
**caractérisé en ce que** les deux côtés longitudinaux (7a, 7b) de la pièce de tôle sont reliés mutuellement par un second joint longitudinal (8) situé à l'extérieur, sur le côté opposé à celui où se trouve le premier joint longitudinal (6) situé à l'extérieur.

7. Elément de structure selon la revendication 6,
**caractérisé en ce que** sur le côté opposé à celui où se trouve le premier joint longitudinal extérieur (6), les deux nervures intermédiaires (3a, 3b) sont reliées l'une à l'autre par une paroi de liaison (10), les deux extrémités (7a, 7b) de la pièce de tôle étant fixées à la paroi de liaison (10).

8. Elément de structure selon la revendication 7,
**caractérisé en ce que** les deux côtés longitudinaux (7a, 7b) de la pièce de tôle sont reliés ou assemblés à la paroi de liaison (10), par des rivets (9).

9. Elément de structure selon l'une des revendications 1 à 8, **caractérisé en ce que** les compartiments de profilé creux (2a, 2b, 2c, 2d, 2e) s'étendent de manière courbée dans la direction longitudinale.
